# EUROPEAN PATENT APPLICATION

(11) **EP 4 844 968 A1**
(43) Date of publication of application: **25.11.2026**
(21) Application number: 24918143.9
(22) Date of filing: 21.10.2024
(51) Int. Cl.: H02H 3/08

(54) **OVERCURRENT PROTECTION METHOD AND APPARATUS, VEHICLE, ELECTRONIC DEVICE, AND STORAGE MEDIUM**

(30) Priority: 19.01.2024 CN 202410084346
(71) Applicant: Guangzhou Automobile Group Co., Ltd., Guangzhou, Guangdong 510030 (CN)
(72) Inventor: YE, Chao, Guangzhou, Guangdong 511434 (CN); LI, Chengxuan, Guangzhou, Guangdong 511434 (CN); CHEN, Chao, Guangzhou, Guangdong 511434 (CN)
(74) Representative: Metida
(86) International application number: PCT/CN2024/126080
(87) International publication number: WO 2025/152534

(57) **Abstract**

The present application relates to an overcurrent protection method and apparatus, a vehicle, an electronic device, and a storage medium. The method includes: acquiring a present current value of a circuit to be protected; if the present current value is greater than a first preset current value and less than or equal to a second preset current value, acquiring a heat correction factor corresponding to the present current value and acquiring a duration corresponding to the present current value, and acquiring a present heat accumulation value according to the present current value, the heat correction factor corresponding to the present current value and the duration corresponding to the present current value; and if the present heat accumulation value is greater than a preset heat threshold, stopping supplying power to the circuit to be protected. Therefore, whether to continue to supply power to the circuit is determined based on the heat correction factor corresponding to the current value and the heat accumulation value calculated based on the duration, solving the problems of low protection accuracy and high cost in the related art, and achieving more precise protection for harnesses and loads at a lower cost.

## Description

### CROSS-REFERENCE TO RELATED APPLICATION

This application claims priority to Chinese Patent Application No. 202410084346.8, filed with the China National Intellectual Property Administration on January 19, 2024 and entitled " OVERCURRENT PROTECTION METHOD AND APPARATUS, VEHICLE, ELECTRONIC DEVICE AND STORAGE MEDIUM", which is incorporated herein by reference in its entirety

### TECHNICAL FIELD

The present application relates to the technical field of vehicles, and in particular, to an overcurrent protection method and apparatus, a vehicle, an electronic device and a storage medium.

### BACKGROUND

There are numerous harnesses and loads inside a vehicle. The loads will be damaged and burned out if not protected in time when experiencing an overcurrent, posing a certain risk to passenger safety.

In the related art, there are generally two methods: (1) protecting circuits using fuses, for example, protecting harnesses by thermally blowing fuses if an overcurrent occurs; and (2) protecting using dedicated integrated chips.

However, the overcurrent protection methods in the related art have the problems of low protection accuracy or high cost, which urgently need to be solved.

### SUMMARY

The present application provides an overcurrent protection method and apparatus, a vehicle, an electronic device and a storage medium to solve the problems of low protection accuracy and high cost in the related art. Therefore, whether to continue to supply power to a circuit is determined based on a heat accumulation value calculated according to a heat correction factor and a duration which correspond to a current value, achieving more precise protection for harnesses and loads at a lower cost.

To achieve the above objective, in a first aspect, according to an embodiment of the present application, proposed is an overcurrent protection method, which includes:
acquiring a present current value of a circuit to be protected;
if the present current value is greater than a first preset current value and less than or equal to a second preset current value, acquiring a heat correction factor corresponding to the present current value and acquiring a duration corresponding to the present current value, and acquiring a present heat accumulation value according to the present current value, the heat correction factor corresponding to the present current value and the duration corresponding to the present current value; and
if the present heat accumulation value is greater than a preset heat threshold, stopping supplying power to the circuit to be protected.

According to one embodiment of the present application, the method further includes the following steps after acquiring the present heat accumulation value according to the present current value, the heat correction factor corresponding to the present current value and the duration corresponding to the present current value:
if the present heat accumulation value is less than or equal to the preset heat threshold, acquiring a new current value of the circuit to be protected at a preset time interval, and acquiring a heat correction factor corresponding to the new current value and a duration corresponding to the new current value;
acquiring a new present heat accumulation value based on the present heat accumulation value, the new current value, the heat correction factor corresponding to the new current value and the duration corresponding to the new current value; and
if the new present heat accumulation value is less than or equal to the preset heat threshold, continuing the step of acquiring the new current value of the circuit to be protected at the preset time interval until the new present heat accumulation value is greater than the preset heat threshold; and if the new present heat accumulation value is greater than the preset heat threshold, stopping supplying power to the circuit to be protected.

According to one embodiment of the present application, the method further includes the following step after acquiring the present current value of the circuit to be protected:
if the present current value is greater than the second preset current value, stopping supplying power to the circuit to be protected.

According to one embodiment of the present application, acquiring the heat correction factor corresponding to the present current value includes:
determining a target range in which the present current value is located from a plurality of preset ranges; and
acquiring the heat correction factor corresponding to the present current value based on the target range.

According to one embodiment of the present application, the method further includes the following steps before determining the target range in which the present current value is located from the plurality of preset ranges:
determining the first preset current value, at least one intermediate protection current value and the second preset current value based on a plurality of current values input by a user; and
determining the plurality of preset ranges according to the first preset current value, each intermediate protection current value and the second preset current value,
wherein the lower limit of each range is the first preset current value or the intermediate protection current value, and the upper limit of each range is the intermediate protection current value or the second preset current value.

According to one embodiment of the present application, acquiring the heat correction factor corresponding to the present current value based on the target range includes:
acquiring the heat correction factor corresponding to the present current value based on a relationship corresponding to the target range.

According to one embodiment of the present application, before acquiring the heat correction factor corresponding to the present current value based on the relationship corresponding to the target range, the step further includes:
acquiring protection time corresponding to the first preset current value and protection time corresponding to each intermediate protection current value;
obtaining a heat correction factor corresponding to the first preset current value based on a preset reference value according to the first preset current value and the protection time corresponding to the first preset current value, obtaining a heat correction factor corresponding to each intermediate protection current value based on the preset reference value according to the at least one intermediate protection current value and the protection time corresponding to each intermediate protection current value, and obtaining a heat correction factor corresponding to the second preset current value based on the preset reference value according to the second preset current value; and
obtaining a relationship corresponding to each range according to the heat correction factor corresponding to the first preset current value, the heat correction factor corresponding to each intermediate protection current value, the heat correction factor corresponding to the second preset current value, the first preset current value, the at least one intermediate protection current value and the second preset current value.

According to one embodiment of the present application, the relationship corresponding to each range is a linear relationship.

According to one embodiment of the present application, obtaining the relationship corresponding to each range according to the heat correction factor corresponding to the first preset current value, the heat correction factor corresponding to each intermediate protection current values, the heat correction factor corresponding to the second preset current value, the first preset current value, the at least one intermediate protection current value and the second preset current value includes:
determining a heat correction factor corresponding to each range for each range according to current values at two endpoints of the range; and
obtaining the relationship corresponding to each range based on the heat correction factor corresponding to each range.

According to one embodiment of the present application, the method further includes the following steps after stopping supplying power to the circuit to be protected:
acquiring a number of times of overcurrent protection; and
if the number of times of overcurrent protection is less than a preset number of times, after a preset waiting time, switching a state of stopping supplying power to the circuit to be protected to a state of supplying power to the circuit to be protected.

According to one embodiment of the present application, the method further includes the following step after acquiring the number of times of overcurrent protection:
if the number of times of overcurrent protection is greater than or equal to the preset number of times, maintaining the state of stopping supplying power to the circuit to be protected.

According to one embodiment of the present application, the preset waiting time is determined according to the number of times the present current value is greater than the first preset current value and the preset time interval.

According to one embodiment of the present application, the method further includes the following step after stopping supplying power to the circuit to be protected:
clearing the present heat accumulation value to zero.

According to one embodiment of the present application, the method further includes the following step after acquiring the present heat accumulation value according to the present current value, the heat correction factor corresponding to the present current value and the duration corresponding to the present current value:
if the present heat accumulation value is greater than the preset heat threshold, generating early warning information based on the present heat accumulation value and outputting the early warning information.

According to the overcurrent protection method proposed in the present application, a current value of a circuit to be protected is acquired, and a heat accumulation value is calculated based on the current value of the circuit to be protected, a heat correction factor corresponding to the current value and a duration corresponding to the current value, so supplying power to the circuit to be protected is stopped when the heat accumulation value is greater than a certain value, solving the problems of low protection accuracy and high cost in the related art, and achieving more precise protection for harnesses and loads at a lower cost.

To achieve the above objectives, in a second aspect, according to an embodiment of the present application, provided is an overcurrent protection apparatus, which includes:
a first acquisition module configured to: acquire a present current value of a circuit to be protected;
a second acquisition module configured to: if the present current value is greater than a first preset current value and less than or equal to a second preset current value, acquire a heat correction factor corresponding to the present current value and a duration corresponding to the present current value, and acquire a present heat accumulation value according to the present current value, the heat correction factor corresponding to the present current value and the duration corresponding to the present current value; and
a control module configured to: if the present heat accumulation value is greater than a preset heat threshold, stop supplying power to the circuit to be protected.

According to one embodiment of the present application, the second acquisition module is further configured to:
if the present heat accumulation value is less than or equal to the preset heat threshold, acquire a new current value of the circuit to be protected at a preset time interval, and acquire a heat correction factor corresponding to the new current value and a duration corresponding to the new current value;
acquire a new present heat accumulation value based on the present heat accumulation value, the new current value, the heat correction factor corresponding to the new current value and the duration corresponding to the new current value; and
if the new present heat accumulation value is less than or equal to the preset heat threshold, continue the step of acquiring the new current value of the circuit to be protected at the preset time interval until the new present heat accumulation value is greater than the preset heat threshold; and if the new present heat accumulation value is greater than the preset heat threshold, stop supplying power to the circuit to be protected.

According to one embodiment of the present application, the control module is further configured to:
if the present current value is greater than the second preset current value, stop supplying power to the circuit to be protected.

According to one embodiment of the present application, the second acquisition module includes:
a determination unit configured to: determine a target range in which the present current value is located from a plurality of preset ranges; and
a first acquisition unit configured to: acquire the heat correction factor corresponding to the present current value based on the target range.

According to one embodiment of the present application, the determination unit is further configured to:
determine the first preset current value, at least one intermediate protection current value and the second preset current value based on a plurality of current values input by a user; and
determine the plurality of preset ranges based on the first preset current value, each intermediate protection current value and the second preset current value,
wherein the lower limit of each range is the first preset current value or the intermediate protection current value, and the upper limit of each range is the intermediate protection current value or the second preset current value.

According to one embodiment of the present application, the first acquisition unit is specifically configured to:
acquire the heat correction factor corresponding to the present current value based on a relationship corresponding to the target range.

According to one embodiment of the present application, the second acquisition module further includes:
a second acquisition unit, configured to: acquire protection time corresponding to the first preset current value and protection time corresponding to each intermediate protection current value;
a third acquisition unit, configured to: obtain a heat correction factor corresponding to the first preset current value based on a preset reference value according to the first preset current value and the protection time corresponding to the first preset current value, obtain a heat correction factor corresponding to each intermediate protection current value based on the preset reference value according to the at least one intermediate protection current value and the protection time corresponding to each intermediate protection current value, and obtain a heat correction factor corresponding to the second preset current value based on the preset reference value according to the second preset current value; and
a fourth acquisition unit configured to: obtain a relationship corresponding to each range according to the heat correction factor corresponding to the first preset current value, the heat correction factor corresponding to each intermediate protection current value, the heat correction factor corresponding to the second preset current value, the first preset current value, the at least one intermediate protection current value and the second preset current value.

According to one embodiment of the present application, the relationship corresponding to each range is a linear relationship.

According to one embodiment of the present application, the second acquisition unit is specifically configured to:
determine a heat correction factor corresponding to each range for each range according to current values at two endpoints of the range; and
obtain the relationship corresponding to each range based on the heat correction factor corresponding to each range,
wherein the lower limit of each range is the first preset current value or the intermediate protection current value, and the upper limit of each range is the intermediate protection current value or the second preset current value.

According to one embodiment of the present application, the control module is further configured to:
acquire a number of times of overcurrent protection; and
if the number of times of overcurrent protection is less than a preset number of times, after a preset waiting time, switch a state of stopping supplying power to the circuit to be protected to a state of supplying power to the circuit to be protected.

According to one embodiment of the present application, the control module is further configured to:
if the number of times of overcurrent protection is greater than or equal to the preset number of times, maintain the state of stopping supplying power to the circuit to be protected.

According to one embodiment of the present application, the preset waiting time is determined according to the number of times the present current value is greater than the first preset current value and the preset time interval.

According to one embodiment of the present application, the control module is further configured to:
clear the present heat accumulation value to zero.

According to one embodiment of the present application, the control module is further configured to:
if the present heat accumulation value is greater than the preset heat threshold, generate early warning information based on the present heat accumulation value and output the early warning information.

According to the overcurrent protection apparatus proposed in the present application, a current value of a circuit to be protected is acquired, and a heat accumulation value is calculated based on the current value of the circuit to be protected, a heat correction factor corresponding to the current value and a duration corresponding to the current value, such that supplying power to the circuit to be protected is stopped when the heat accumulation value is greater than a certain value, solving the problems of low protection accuracy and high cost in the related art, and achieving more precise protection for harnesses and loads at a lower cost.

To achieve the above objectives, in a third aspect, according to an embodiment of the present application, provided is an overcurrent protection apparatus, which includes: a controller, a driving circuit, and a current sampling circuit, the driving circuit and the current sampling circuit being respectively connected to the controller, wherein:
the current sampling circuit is configured to: acquire a present current value of a circuit to be protected; and
the controller is configured to: if the present current value is greater than a first preset current value and less than or equal to a second preset current value, acquire a heat correction factor corresponding to the present current value and a duration corresponding to the present current value, and acquire a present heat accumulation value according to the present current value, the heat correction factor corresponding to the present current value and the duration corresponding to the present current value; and if the present heat accumulation value is greater than a preset heat threshold, control a driving chip to stop supplying power to the circuit to be protected.

According to one embodiment of the present application, the driving circuit and the current sampling circuit are integrated into a driving chip.

According to one embodiment of the present application, the current sampling circuit includes:
a sampling resistor, wherein the input of the sampling resistor is connected to the output of the driving chip, and the output of the sampling resistor is connected to a load of the circuit to be protected; and
an amplifier, wherein the first input of the amplifier is connected to the output of the driving circuit, the second input of the amplifier is connected to the output of the sampling resistor and the load of the circuit to be protected respectively, and the output of the amplifier is connected to the controller.

According to one embodiment of the present application, the controller is further configured to: determine a target range in which the present current value is located from a plurality of preset ranges, and acquire the heat correction factor corresponding to the present current value based on a relationship corresponding to the target range.

According to one embodiment of the present application, the controller is further configured to: acquire protection time corresponding to the first preset current value, at least one intermediate protection current value, and protection time corresponding to each intermediate protection current value; obtain a heat correction factor corresponding to the first preset current value based on a preset reference value according to the first preset current value and the protection time corresponding to the first preset current value, obtain a heat correction factor corresponding to each intermediate protection current value based on the preset reference value according to the at least one intermediate protection current value and the protection time corresponding to each intermediate protection current value, and obtain a heat correction factor corresponding to the second preset current value based on the preset reference value according to the second preset current value; and obtain a relationship corresponding to each range according to the heat correction factor corresponding to the first preset current value, the heat correction factor corresponding to each intermediate protection current value, the heat correction factor corresponding to the second preset current value, the first preset current value, the at least one intermediate protection current value and the second preset current value.

According to the overcurrent protection apparatus proposed in the present application, a current value of a circuit to be protected is acquired by a current sampling circuit, and a heat accumulation value is calculated by a controller based on the current value of the circuit to be protected, a heat correction factor corresponding to the current value and a duration corresponding to the current value, so a driving chip is controlled to stop supplying power to the circuit to be protected when the heat accumulation value is greater than a certain value, solving the problems of low protection accuracy and high cost in the related art, and achieving more precise protection for harnesses and loads at a lower cost.

To achieve the above objectives, in a fourth aspect of the present application, an embodiment proposes a vehicle, including: the overcurrent protection apparatus as described in the embodiment in the third aspect, or the overcurrent protection apparatus as described in the embodiment in the fourth aspect.

To achieve the above objectives, in a fifth aspect of the present application, an embodiment proposes an electronic device, including: a memory, a processor and a computer program stored in the memory and executable on the processor, wherein the processor executes the program to implement the overcurrent protection method as described in the above embodiment.

To achieve the above objectives, in a sixth aspect of the present application, an embodiment proposes a computer-readable storage medium storing a computer program, wherein the computer program is executed by a processor to implement the overcurrent protection method as described in the above embodiment.

Additional aspects and advantages of the present application will be set forth in part in the following description, and in part will be obvious from the following description, or may be learned by practice of the present application.

### BRIEF DESCRIPTION OF THE DRAWINGS

The above and/or additional aspects and advantages of the present application will become apparent and readily understood from the following description of the embodiments taken in conjunction with the accompanying drawings, in which:
FIG. 1 is a flowchart of an overcurrent protection method according to an embodiment of the present application;
FIG. 2 is a schematic structural diagram of an overcurrent protection circuit according to an embodiment of the present application;
FIG. 3 is a flowchart of an overcurrent protection method according to a specific embodiment of the present application;
FIG. 4 is a schematic block diagram of an overcurrent protection apparatus according to an embodiment of the present application;
FIG. 5 is a block flowchart of another overcurrent protection apparatus according to an embodiment of the present application;
FIG. 6 is a schematic structural diagram of an overcurrent protection apparatus according to a specific embodiment of the present application; and
FIG. 7 is a schematic block diagram of an electronic device according to an embodiment of the present application.

### DETAILED DESCRIPTION

The embodiments of the present application are described in detail below, examples of which are shown in the accompanying drawings, wherein the same or similar reference numerals denote the same or similar elements or elements having the same or similar functions throughout. The embodiments described below with reference to the accompanying drawings are exemplary and intended to explain the present application, and should not be construed as limiting the present application.

The overcurrent protection method and apparatus, vehicle, electronic device and storage medium according to the embodiments of the present application will now be described with reference to the accompanying drawings. First, the overcurrent protection method according to an embodiment of the present application will be described with reference to the accompanying drawings.

Before introducing the overcurrent protection method of the embodiments of the present application, the overcurrent protection methods in the related art will be briefly introduced first.

In the related art, there are generally two methods: (1) protecting circuits using fuses, for example, protecting harnesses by thermally blowing fuses if an overcurrent occurs; and (2) protecting harnesses using dedicated integrated chips if an overcurrent occurs by calculating heat accumulation values by the integrated chips and turning off output once a threshold is reached.

However, although the use of fuses can protect harnesses and loads, the maintenance cost in the later stage is relatively high; the use of dedicated integrated chips is costly, some chips also do not support user-defined settings for protection current and protection time, and the chips do not provide protection when an overcurrent below a chip protection threshold occurs; moreover, some chips have limited user-defined protection points, and heat accumulation calculation is performed on adjacent protection points according to the same current value, resulting in low protection accuracy and difficulty in coping with complex real-world operating conditions.

Based on the above problems, the present application proposes an overcurrent protection method, in which a current value of a circuit to be protected is acquired by a current sampling circuit, and a heat accumulation value is calculated by a controller based on the current value of the circuit to be protected, a heat correction factor corresponding to the current value and a duration corresponding to the current value, so a driving chip is controlled to stop supplying power to the circuit to be protected when the heat accumulation value is greater than a certain value, solving the problems of low protection accuracy and high cost in the related art, and achieving more precise protection for harnesses and loads at a lower cost.

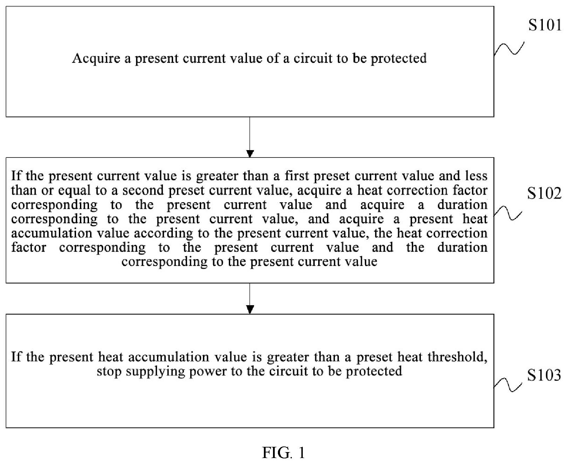

Specifically, FIG. 1 is a flowchart of an overcurrent protection method according to an embodiment of the present application.

As shown in FIG. 1, the overcurrent protection method includes the following steps:
In step S101, a present current value of a circuit to be protected is acquired.

The circuit to be protected may refer to a circuit in a vehicle or any other circuit that requires protection. The circuit to be protected may be composed of a plurality of loads and a plurality of harnesses, wherein the loads may be inductive loads, may be capacitive loads, or may be resistive loads.

It should be understood that there are numerous harnesses and loads inside a vehicle. The loads will be damaged and burned out if not protected in time when experiencing an overcurrent, posing a certain risk to passenger safety. Therefore, in an embodiment of the present application, a present current value of a circuit to be protected may be acquired first. There are many methods for acquiring the current value of the circuit to be protected. The following two examples illustrate how to acquire the current value of the circuit to be protected.

As one possible implementation method, the current value of the circuit to be protected may be acquired by a current acquisition unit in an existing driving chip in an embodiment of the present application.

As another possible implementation method, the current value of the circuit to be protected may be acquired by an integrated operational amplifier and a current sampling resistor in an embodiment of the present application can obtain.

It should be noted that the above methods for acquiring the current value of the circuit to be protected are merely exemplary and are not intended to limit the present application. Those skilled in the art can choose different methods to acquire the current value of the circuit to be protected according to actual situations, which will not be repeated in detail herein to avoid redundancy.

In step S102, if the present current value is greater than a first preset current value and less than or equal to a second preset current value, a heat correction factor corresponding to the present current value and a duration corresponding to the present current value are acquired, and a present heat accumulation value is acquired according to the present current value, the heat correction factor corresponding to the present current value and the duration corresponding to the present current value.

The first preset current value may be a current value at which the protection of the circuit to be protected begins, that is, when the current value of the circuit to be protected is greater than the first preset current value and continues for a certain period of time, damage to the loads and harnesses of the circuit to be protected may be caused. The second current value may be a maximum current value that the circuit to be protected can withstand, that is, if the current value of the circuit to be protected is greater than the second preset current value, damage to the loads and harnesses of the circuit to be protected may be caused. Both the first preset current value and the second preset current value may be thresholds preset by a user, may be thresholds acquired through a limited number of experiments, or may be thresholds obtained through a limited number of computer simulations, which will not be specifically limited herein. The heat correction factor is a factor used to correct the heat accumulation calculation, that is, due to excessive current in the circuit to be protected, a heating phenomenon occurs in the circuit to be protected, resulting in inconsistency between the actual heat accumulation and that calculated based on the current and time. For example, if the current in the circuit to be protected is too large, a heating phenomenon occurs. Since heating may affect the harnesses and loads, for example, the material of the harnesses will undergo chemical changes due to heat change. For another example, the internal resistance of the harnesses and the internal resistance of the loads will change due to the heating phenomenon. The duration corresponding to the present current value may be a duration before the current value in the circuit to be protected fluctuates.

Specifically, after acquiring the present current value of the circuit to be protected, in an embodiment of the present application, a current range in which the present current value is located may be determined. If the present current value is less than or equal to a first preset current value, it means that the harnesses or loads may not be damaged when the circuit to be protected operates at the present current value. If the present current value is greater than the first preset current value and less than or equal to a second preset current value, it means that the harnesses or loads may be damaged when the circuit to be protected operates at the present current value. Therefore, in order to protect the circuit to be protected, in an embodiment of the present application, a heat correction factor corresponding to the present current value and a duration corresponding to the present current value may be acquired, so that a present heat accumulation value is calculated based on the present current value, the heat correction factor corresponding to the present current value and the duration corresponding to the present current value.

It should be noted that, in an embodiment of the present application, the present heat accumulation value may be calculated according to a product of the heat correction factor corresponding to the present current value, the square of the present current value and the duration corresponding to the present current value. For example, assuming that the heat correction factor corresponding to the present current value is Y1, the present current value is I1, the duration corresponding to the present current value is T1, and the present heat accumulation value is Q, then the present heat accumulation value Q=Y1*I1*I1*T1.

According to the overcurrent protection method proposed in an embodiment of the present application, the heat correction factor corresponding to the present current value is considered when the present heat accumulation value is calculated, greatly improving the accuracy of heat accumulation calculation.

In step S103, if the present heat accumulation value is greater than a preset heat threshold, supplying power to the circuit to be protected is stopped.

The preset heat threshold is a maximum heat accumulation value under the condition where the harnesses and loads of the circuit to be protected are not damaged. The preset heat threshold may be a threshold preset by the user, may be a threshold acquired through a limited number of experiments, or may be a threshold obtained through a limited number of computer simulations. Preferably, the preset heat threshold may be calculated according to the actual situations of the harnesses and loads of the circuit to be protected.

It should be understood that, if the present heat accumulation value of the circuit to be protected is greater than the preset heat threshold, continuing to supply power to the circuit to be protected may cause damage to the harnesses and loads of the circuit to be protected. Therefore, in an embodiment of the present application, if the present heat accumulation value is greater than the preset heat threshold, supplying power to the circuit to be protected may be stopped, thereby effectively protecting the harnesses and loads of the circuit to be protected and preventing the occurrence of user safety risk due to damage to the harnesses and loads of the circuit to be protected.

Therefore, a current value of a circuit to be protected is acquired, and a heat accumulation value is calculated based on the current value of the circuit to be protected, a heat correction factor corresponding to the current value and a duration corresponding to the current value, so supplying power to the circuit to be protected is stopped when the heat accumulation value is greater than a certain value, solving the problems of low protection accuracy and high cost in the related art, and achieving more precise protection for harnesses and loads at a lower cost.

Furthermore, since the present current value in the circuit to be protected may not always be at a constant value, in order to calculate the present heat accumulation value of the circuit to be protected more accurately, in some embodiments, in an embodiment of the present application, a present heat accumulation value is acquired based on the present current value, the heat correction factor corresponding to the present current value and the duration corresponding to the present current value, and if the present heat accumulation value is less than or equal to a preset heat threshold, a new current value of the circuit to be protected is acquired at a preset time interval, and a heat correction factor corresponding to the new current value and a duration corresponding to the new current value are acquired; a new present heat accumulation value is acquired based on the present heat accumulation value, the new current value, the heat correction factor corresponding to the new current value and the duration corresponding to the new current value; and if the new present heat accumulation value is greater than the preset heat threshold, supplying power to the circuit to be protected is stopped.

The preset time interval may be a time interval preset by the user, may be a time interval acquired through a limited number of experiments, or may be a time interval obtained through a limited number of computer simulations.

Specifically, because the current value in the circuit to be protected may fluctuate, in order to calculate the present heat accumulation value of the circuit to be protected more accurately, in an embodiment of the present application, a new current value of the circuit to be protected is acquired based on a preset time interval. For example, if the present current value is 2A, the preset time interval is 10ms, and the currents acquired at the time interval are 2A, 2A, 3A, 3.6A respectively, it means that the duration corresponding to the current 2A is 20ms and the duration corresponding to the current 3A is 10ms. In an embodiment of the present application, when calculating a heat accumulation value, the heat accumulation value may be calculated once each time an acquisition occurs, or the heat accumulation value may be calculated once when a change in current occurs. Preferably, in order to ensure more accurate protection of the circuit to be protected, in an embodiment of the present application, the heat accumulation value may be calculated once each time an acquisition occurs, so that if the new present heat accumulation value is greater than the preset thermal threshold, supplying power to the circuit to be protected is stopped.

For example, in an embodiment of the present application, if the currents acquired are I1, I2, I3, ..., In, the durations corresponding to the currents I1, I2, I3, ..., In are T1, T2, T3, ..., Tn respectively, and the heat correction factors corresponding to the currents I1, I2, I3, ..., In are Y2, Y3, ..., Yn respectively, the new present heat accumulation value Qₜₒₜₐₗ = Y1*I1*I1*T1 + Y2*I2*I2*T2 + Y3*I3*I3*T3 ... + Yn*In*In*Tn.

It should be noted that, in an embodiment of the present application, the protection time corresponding to the current in each range may be accurately calculated according to the durations T1, T2, T3, ..., Tn respectively corresponding to the currents I1, I2, I3, ..., In, further improving the protection accuracy.

Furthermore, according to one embodiment of the present application, after acquiring the new present heat accumulation value based on the present heat accumulation value according to the new current value, the heat correction factor corresponding to the new current value and the duration corresponding to the new current value, the method further includes: if the new present heat accumulation value is less than or equal to the preset heat threshold, re-performing the step of acquiring the new current value of the circuit to be protected at the preset time interval, until the new present heat accumulation value is greater than the preset heat threshold.

That is to say, if the new present heat accumulation value is less than or equal to the preset heat threshold, the harnesses and loads of the circuit to be protected will still not be damaged. In an embodiment of the present application, the step of acquiring the new current value of the circuit to be protected at the preset time interval is continued and the new heat accumulation value is recalculated, until the new present heat accumulation value is greater than the preset heat threshold, and supplying power to the circuit to be protected is stopped.

According to the overcurrent protection method proposed in an embodiment of the present application, current values of a circuit to be protected are acquired at a preset time interval, thereby calculating heat correction factors corresponding to all current values and heat values within all durations corresponding to all current values. A heat accumulation value is obtained by accumulating the heat correction factors corresponding to all current values and the heat values within the durations corresponding to all current values. After the heat accumulation value is greater than a preset heat threshold, supplying power to the circuit to be protected is stopped, thereby achieving higher precision in the calculation of the heat accumulation value, and thus achieving high-precision overcurrent protection. The time to cut off power supply to the circuit to be protected is more accurate, effectively protecting the harnesses and loads of the circuit to be protected.

Furthermore, after acquiring the present current value of the circuit to be protected, if the present current value is greater than the second preset current value, it means that continuing to supply power to the circuit to be protected may cause damage to the loads and harnesses of the circuit to be protected.

Therefore, after acquiring the present current value of the circuit to be protected, the method further includes the following step: if the current value is greater than the second preset current value, stopping supplying power to the circuit to be protected.

That is to say, in an embodiment of the present application, the circuit to be protected is directly disconnected from a power supply when the current value is large, thereby protecting the loads and harnesses of the circuit to be protected.

According to the overcurrent protection method proposed in an embodiment of the present application, if the current value is greater than the second preset current value, supplying power to the circuit to be protected is stopped, thereby effectively preventing the loads or harnesses of the circuit to be protected from being damaged due to heating, and thus improving the safety of using the circuit to be protected.

To enable those skilled in the art to understand more thoroughly how to acquire the heat correction factor corresponding to the current value, a detailed explanation is provided below with reference to specific embodiments.

According to one embodiment of the present application, acquiring the heat correction factor corresponding to the present current value includes: determining a target range in which the present current value is located from a plurality of preset ranges; and acquiring the heat correction factor corresponding to the present current value based on the target range.

The plurality of preset ranges are ranges defined according to a plurality of current values, and a current value in any range may correspond to a heat correction factor.

Specifically, in an embodiment of the present application, after acquiring the present current value of the circuit to be protected, in an embodiment of the present application, a target range in which the present current value is located can be determined in advance based on the plurality of preset ranges, after determining the target range in which the present current value is located, since each current value in the range corresponds to a heat correction factor, in an embodiment of the present application, the heat correction factor corresponding to the present current value can be acquired based on the target range after determining the target range in which the present current value is located from the plurality of preset ranges.

As one possible implementation method, according to one embodiment of the present application, acquiring the heat correction factor corresponding to the present current value based on the target range includes: acquiring the heat correction factor corresponding to the present current value based on a relationship corresponding to the target range.

The relationship corresponding to the target range is a corresponding relationship between each current value and the heat correction factor. This relationship may be a linear relationship, or may be a nonlinear relationship. Preferably, according to one embodiment of the present application, the relationship corresponding to each range is a linear relationship.

Specifically, when the relationship corresponding to the target range is a linear relationship, in an embodiment of the present application, the heat correction factor corresponding to the present current value can be calculated based on the linear relationship after acquiring the present current value. When the relationship corresponding to the target range is a nonlinear relationship, in an embodiment of the present application, the heat correction factor corresponding to the present current value can be calculated based on the nonlinear relationship.

For example, if the plurality of preset ranges are (2A, 3A], (3A, 5A], (5A, 6A], (6A, 8A], (8A, 10A], and the present current value is 3.4A, it means that the target range in which the present current value is located is (3A, 5A). Since the relationship corresponding to each range is a linear relationship Y=KI+B, wherein K is the slope of a straight line and B is a constant, after acquiring the present current value of the circuit to be protected, in an embodiment of the present application, the heat correction factor Y can be calculated through the above linear relationship. The following specific example illustrates how to obtain the relationship corresponding to each range.

As one possible implementation method, according to one embodiment of the present application, before acquiring the heat correction factor corresponding to the present current value based on the relationship corresponding to the target range, the method further includes: acquiring protection time corresponding to the first preset current value and protection time corresponding to each intermediate protection current value; obtaining a heat correction factor corresponding to the first preset current value based on a preset reference value according to the first preset current value and the protection time corresponding to the first preset current value, obtaining a heat correction factor corresponding to each intermediate protection current value based on the preset reference value according to at least one intermediate protection current value and the protection time corresponding to each intermediate protection current value, and obtaining a heat correction factor corresponding to the second preset current value based on the preset reference value according to the second preset current value; and obtaining a relationship corresponding to each range according to the heat correction factor corresponding to the first preset current value, the heat correction factor corresponding to each intermediate protection current value, the heat correction factor corresponding to the second preset current value, the first preset current value, at least one intermediate protection current value and the second preset current value.

The reference value may be a value preset by the user, may be a value acquired through a limited number of experiments, or may be a value obtained through a limited number of computer simulations, which will not be specifically limited herein.

Specifically, first, in an embodiment of the present application, protection time corresponding to the first preset current value and protection time corresponding to each intermediate protection current value are acquired, in an embodiment of the present application, a first product of the square of the first preset current value and the protection time corresponding to the first preset current value is calculated, and a heat correction factor corresponding to the first preset current value is obtained according to the ratio of the reference value to the first product. Then, for each intermediate protection current value, each product of the intermediate protection current value and the protection time corresponding to that intermediate protection current value is calculated, and a heat correction factor corresponding to each intermediate protection current value is obtained according to the ratio of the reference value to each product. Finally, a second product of the square of the second preset current value and the protection time corresponding to the second preset current value is calculated, and a heat correction factor corresponding to the second preset current value is obtained according to the ratio of the reference value to the second product.

According to the overcurrent protection method proposed in an embodiment of the present application, a reference value is preset, and a heat correction factor is calculated based on the reference value, so that the calculation of a heat accumulation value is more accurate, thereby disconnecting the circuit to be protected from the power supply more promptly, effectively ensuring the safety of the circuit to be protected, and further improving the protection accuracy.

Furthermore, according to one embodiment of the present application, a relationship corresponding to each range is obtained according to the heat correction factor corresponding to the first preset current value, the heat correction factor corresponding to each intermediate protection current value, the heat correction factor corresponding to the second preset current value, the first preset current value, at least one intermediate protection current value, and the second preset current value.

It should be understood that, in an embodiment of the present application, after calculating the heat correction factor corresponding to the first preset current value, the heat correction factor corresponding to at least one intermediate protection current value and the heat correction factor corresponding to the second preset current value, a relationship corresponding to this range may be calculated based on current values at both ends of each range and heat correction factors corresponding to the current values at both ends. For example, if the current values in a certain range are I1 and I2, and the corresponding heat correction factors are Y1 and Y2, a first difference between Y1 and Y2 may be calculated, and a second difference between I1 and I2 may be calculated. The slope value of the linear relationship corresponding to this range may be obtained according to the ratio of the first difference to the second difference, and a constant value of the linear relationship corresponding to this range may be obtained based on the calculation formula of the linear relationship (such as Y=KI+B).

According to the overcurrent protection method proposed in an embodiment of the present application, in an embodiment of the present application, the current values are classified into a plurality of ranges, and each range corresponds to a corresponding relationship generated through fitting, so the heat correction factor corresponding to the current value is determined based on the relationship, which further ensures the accuracy and precision of the heat accumulation value.

Furthermore, the following describes how to determine a plurality of preset ranges with reference to specific embodiments.

According to one embodiment of the present application, before determining the target range in which the current value is located from the plurality of preset ranges, the method further includes: determining the first preset current value, at least one intermediate protection current value and the second preset current value based on a plurality of current values input by a user; and determining the plurality of preset ranges according to the first preset current value, each intermediate protection current value and the second preset current value, wherein the lower limit of each range is the first preset current value or the intermediate protection current value, and the upper limit of each range is the intermediate protection current value or the second preset current value.

It should be understood that the user may self-set a plurality of current values according to the sizes of various loads and specifications of harnesses of the circuit to be protected. The plurality of current values may include a current value (i.e., the first preset current value) at which the protection of the circuit to be protected begins, an intermediate protection current value (i.e., at least one intermediate protection current value) at which the circuit to be protected can continue to operate for a period of time, and a maximum current value (i.e., the second preset current value) that the circuit to be protected can withstand. When dividing the ranges, in an embodiment of the present application, two consecutive currents may be used as one range.

For example, if the plurality of current values input by the user are 2A, 3A, 4.5A, 6A, 7A, 8.5A, then the plurality preset ranges are (2A, 3A], (3A, 4.5A], (4.5A, 6A], (6A, 7A], (7A, 8.5A].

According to the overcurrent protection method proposed in an embodiment of the present application, the user can customize a starting protection current value (i.e., the first preset current value), a process protection current value (i.e., at least one intermediate protection current value), and a termination protection current value (i.e., the second preset current value) for the circuit to be protected, and the protection time of each current value point can be customized, thereby effectively dealing with a combination of various load sizes and wire harness specifications.

According to one embodiment of the present application, after stopping power supply to the circuit to be protected, the method further includes: acquiring a number of times of overcurrent protection; and if the number of times of overcurrent protection is less than a preset number of times, after a preset waiting time, switching a state of stopping supplying power to the circuit to be protected to a state of supplying power to the circuit to be protected.

The number of times of overcurrent protection is the number of times of stopping supplying power to the circuit to be protected if the current in the circuit to be protected is too high. The number of times of overcurrent protection is equal to the original number of times of overcurrent protection + 1. The initial number of times of overcurrent protection is zero. That is to say, after stopping supplying power to the circuit to be protected each time, the number of times of overcurrent protection is increased by 1 on the basis of the original number of times of overcurrent protection. The preset number of times may be 3, or may be 6 or any other reasonable value. The preset waiting time is a waiting duration for switching the state of stopping supplying power to the circuit to be protected to the state of supplying power to the circuit to be protected.

According to one embodiment of the present application, the preset waiting time is determined according to the number of times the present current value is greater than the first preset current value and the preset time interval. For example, the preset waiting time in the embodiment of the present invention may be a product of the preset time interval and the number of times the present current value is greater than the first preset current value, or may be 0.7 times, 0.9 times or 1.3 times the product. The specific duration of the preset waiting time may be adjusted according to the heat dissipation capacity of the load and the heat dissipation capacity of the harness, which will not be specifically limited herein.

Specifically, if the number of times of overcurrent protection is less than the preset number of times, it means that false power outage may occur due to voltage instability or other reasons, and the circuit to be protected can continue to operate. Therefore, the state of stopping supplying power to the circuit to be protected can be switched to the state of supplying power to the circuit to be protected.

According to the overcurrent protection method proposed in an embodiment of the present application, after a preset waiting time, the state of stopping supplying power to the circuit to be protected can be switched to the state of supplying power to the circuit to be protected, to continue to supply power to the circuit to be protected, effectively improving the reliability of supplying power to the circuit to be protected.

Furthermore, according to one embodiment of the present application, after acquiring the number of times of overcurrent protection, the method further includes: if the number of times of overcurrent protection is greater than or equal to the preset number of times, maintaining the state of stopping supplying power to the circuit to be protected.

That is to say, if the number of times of overcurrent protection is greater than or equal to the preset number of times, in order to ensure the safety of the circuit to be protected, in an embodiment of the present application, the state of stopping supplying power to the circuit to be protected stopped may be maintained, thereby avoiding damage to the loads and harnesses due to repeatedly supplying power to the circuit to be protected.

According to the overcurrent protection method proposed in an embodiment of the present application, by setting the preset number of times and preset waiting time, the power supply state of the circuit to be protected is switched, thereby effectively preventing false power outages due to voltage instability, and effectively improving the reliability of supplying power to the circuit to be protected.

According to one embodiment of the present application, after stopping supplying power to the circuit to be protected, the method further includes: clearing the present heat accumulation value to zero.

Specifically, after stopping supplying power to the circuit to be protected, the circuit to be protected is disconnected from the power supply, thereby preventing the loads or harnesses of the circuit to be protected from continuing to heat up when the temperature is too high, thus achieving overcurrent protection for the loads and harnesses of the circuit to be protected. In an embodiment of the present application, after stopping supplying power to the circuit to be protected, the present heat accumulation value is cleared to zero, avoiding the impact of the previously accumulated heat accumulation value on the subsequent overcurrent protection calculation.

According to the overcurrent protection method proposed in an embodiment of the present application, the feasibility and reliability of the overcurrent protection method if power is supplied to the circuit to be protected again are ensured by clearing the present heat accumulation value to zero after stopping supplying power to the circuit to be protected.

In addition, to further ensure safety, in an embodiment of the present application, the user may be forewarned through relevant alarm signals if the present heat accumulation value is greater than the preset heat threshold.

According to one embodiment of the present application, after acquiring the present heat accumulation value according to the present current value, the heat correction factor corresponding to the present current value and the duration corresponding to the present current value, the method further includes: if the present heat accumulation value is greater than the preset heat threshold, generating early warning information based on the present heat accumulation value and outputting the early warning information.

The early warning information is information configured to prompt that the present heat accumulation value of the circuit to be protected is greater than the preset heat threshold. The early warning information may include optical early warning information, or may include acoustic early warning information, or may include both optical early warning information and acoustic early warning information. The early warning information may be output to a mobile terminal of the user, or to a vehicle infotainment system (for example, displayed on a vehicle display screen), or other display devices may be mounted on the vehicle, for example, in an embodiment of the present application, at least one optical display device (e.g., a warning lamp) and at least one acoustic prompting device (e.g., a warning horn or a vehicle speaker) may be mounted on the vehicle.

Specifically, if the present heat accumulation value is greater than the preset heat threshold, in an embodiment of the present application, at least one optical display device is controlled to provide optical prompts, or at least one acoustic prompt device is controlled to provide acoustic prompts, or at least one optical display device is controlled to provide optical prompts while controlling at least one acoustic prompt device to provide acoustic prompts.

For example, there may be numerous methods to provide prompts. If the present heat accumulation value is greater than the preset heat threshold, in an embodiment of the present application, the warning horn may be controlled to make a warning sound to prompt the user that "since the present heat accumulation value is greater than the preset heat threshold, supplying power to the circuit to be protected has been stopped." In an embodiment of the present application, the warning lamp may be controlled to emit flashing light to achieve the purpose of multidirectional prompting and to serve as a warning to the user.

Optionally, in one embodiment of the present application, a display portion of at least one acoustic display device may be arranged on a vehicle door, and at least one optical prompting device may be arranged on a dashboard. However, the above-mentioned arrangements are merely illustrative, and those skilled in the art can make the arrangements according to actual situations, which will not be specifically limited herein.

In addition, the early warning information can also be sent to the mobile terminal of the user, such as a mobile phone.

According to the overcurrent protection method proposed in an embodiment of the present application, if the present heat accumulation value is greater than the preset heat threshold, early warning information is generated based on the present heat accumulation value and is output to the vehicle infotainment system or the mobile phone of the user through optical prompts, acoustic prompts, or both optical and acoustic prompts, thereby prompting the user that the circuit to be protected experiences an overcurrent at present, so that the user can find a relevant repair department for vehicle repair in time after the problem occurs.

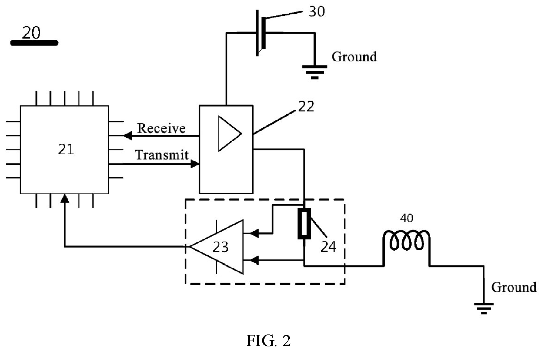

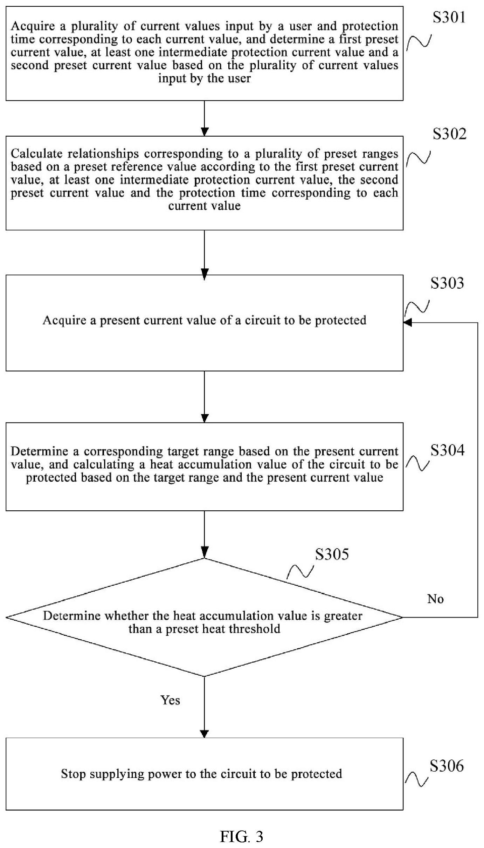

To help those skilled in the art further understand the overcurrent protection method in an embodiment of the present application, the following description is provided in conjunction with the specific embodiments shown in FIGS. 2 and 3.

As shown in FIG. 2, FIG. 2 is a schematic diagram of an overcurrent protection circuit according to an embodiment of the present application.

Specifically, the overcurrent protection circuit 20 includes: a microcontroller 21, a driving chip 22, an integrated operational amplifier 23 and a current sampling resistor 24, wherein the signal input of the driving chip 22 is connected to the microcontroller 21, the power supply input of the driving chip 22 is connected to a power supply 30, the signal output of the driving chip 22 is connected to the microcontroller 21, the power supply output of the driving chip 22 is connected to the input of the current sampling resistor 24, the output of the current sampling resistor 24 is connected to a load 40 of the circuit to be protected 10, the first input of the integrated operational amplifier 23 is connected to the power supply output of the driving chip 22, the second input of the integrated operational amplifier 23 is connected to the output of the current sampling resistor 24 and the load of the circuit to be protected respectively, and the output of the integrated operational amplifier 23 is connected to the microcontroller 21.

Specifically, the microcontroller 21 has at least one ADC interface and an SPI interface, through which the current transmitted by the driving chip 22 or the integrated operational amplifier 23 may be read. The user may pre-configure a load current and protection time curve in the microcontroller 21 (this time curve may be a time curve in the relevant art, or may be a time curve generated by the current and protection time set by the user himself/herself). A straight line segment between adjacent current protection points can be calculated and fitted through a relevant program. When the current value of the circuit to be protected falls within this range segment, the protection time for the current value can be calculated. If the current value is stable, if the duration reaches the protection time, the driving chip 22 may be controlled to disconnect the power supply 30 from the load 40. After the microcontroller 21 controls the driving chip 22 to turn on, the power supply 30 can supply power to the load 40. In the event of an overcurrent fault, the microcontroller 21 can turn off the driving chip 22 to avoid burning harnesses or loads. That is, after receiving a signal transmitted by the microcontroller 21, the driving chip 22 may disconnect the power supply from the circuit to be protected, or may close the connection between the power supply and the circuit to be protected. The current sampling resistor 24 is usually a surface-mount device. The current sampling resistor 24 can convert a current signal on the load into a voltage signal and transmit the voltage signal to the integrated operational amplifier 23. The integrated operational amplifier 23 is typically a surface-mount device. The integrated operational amplifier 23 is configured to amplify a small voltage signal and transmit the amplified voltage signal to the microcontroller 21. It should be noted that, if the driving chip 22 is integrated with a current acquisition unit, in an embodiment of the present application, the acquired present current value of the circuit to be protected can be directly reported to the microcontroller 21 through the driving chip, and the overcurrent protection circuit 20 can remove the integrated operational amplifier 23 and the current sampling resistor 24 of the circuit.

According to the overcurrent protection method proposed in an embodiment of the present application, harnesses can be protected by means of the current sampling unit inside the driving chip by turning off the driving chip in time when an overcurrent occurs. This method has low cost and requires no subsequent maintenance.

Furthermore, as shown in FIG3, FIG3 is a flowchart of an overcurrent protection method according to an embodiment of the present application.

As shown in FIG. 3, the overcurrent protection method includes the following steps:
S301, acquiring a plurality of current values input by a user and protection time corresponding to each current value, and determining a first preset current value, at least one intermediate protection current value and a second preset current value based on the plurality of current values input by the user.

S302, calculating relationships corresponding to a plurality of preset ranges based on a preset reference value according to the first preset current value, at least one intermediate protection current value, the second preset current value and the protection time corresponding to each current value.

S303, acquiring a present current value of a circuit to be protected.

S304, determining a corresponding target range based on the present current value, and calculating a heat accumulation value of the circuit to be protected based on the target range and the present current value.

S305, determining whether the heat accumulation value is greater than a preset heat threshold, if the heat accumulation value is greater than the preset heat threshold, proceeding to step S306, and if the heat accumulation value is less than or equal to the preset heat threshold, returning to step S303.

S306, stopping supplying power to the circuit to be protected.

According to the overcurrent protection method proposed in an embodiment of the present application, a current value of a circuit to be protected is acquired, and a heat accumulation value is calculated based on the current value of the circuit to be protected, a heat correction factor corresponding to the current value and a duration corresponding to the current value, so supplying power to the circuit to be protected is stopped when the heat accumulation value is greater than a certain value, solving the problems of low protection accuracy and high cost in the related art, and achieving more precise protection for harnesses and loads at a lower cost.

Next, the overcurrent protection apparatus proposed according to the embodiment of the present application is described with reference to the accompanying drawings.

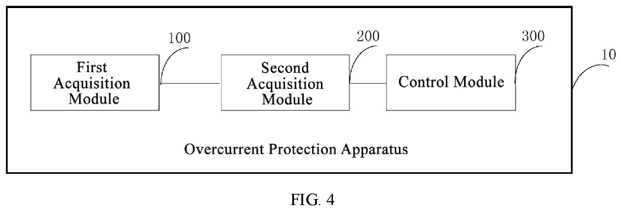

FIG. 4 is a schematic block diagram of an overcurrent protection apparatus according to an embodiment of the present application.

As shown in FIG. 4, the overcurrent protection apparatus 10 includes: a first acquisition module 100, a second acquisition module 200 and a control module 300.

The first acquisition module 100 is configured to: acquire a present current value of a circuit to be protected.

The second acquisition module 200 is configured to: if the present current value is greater than a first preset current value and less than or equal to a second preset current value, acquire a heat correction factor corresponding to the present current value and a duration corresponding to the present current value, and acquire a present heat accumulation value according to the present current value, the heat correction factor corresponding to the present current value and the duration corresponding to the present current value.

The control module 300 is configured to: if the present heat accumulation value is greater than the preset heat threshold, stop supplying power to the circuit to be protected.

According to one embodiment of the present application, the second acquisition module 200 is further configured to:
if the present heat accumulation value is less than or equal to the preset heat threshold, acquire a new current value of the circuit to be protected at a preset time interval, and acquire a heat correction factor corresponding to the new current value and a duration corresponding to the new current value;
acquire a new present heat accumulation value based on the present heat accumulation value, the new current value, the heat correction factor corresponding to the new current value and the duration corresponding to the new current value; and
if the new present heat accumulation value is greater than the preset heat threshold, stop supplying power to the circuit to be protected.

According to one embodiment of the present application, the control module 300 is further configured to:
if the new present heat accumulation value is less than or equal to the preset heat threshold, re-perform the step of acquiring the new current value of the circuit to be protected at the preset time interval, until the new present heat accumulation value is greater than the preset heat threshold.

According to one embodiment of the present application, the control module 300 is further configured to:
if the current value is greater than the second preset current value, stop supplying power to the circuit to be protected.

According to one embodiment of the present application, the second acquisition module 200 includes: a determination unit and a first acquisition unit.

The determination unit is configured to: determine a target range in which the current value is located from a plurality of preset ranges.

The first acquisition unit is configured to: acquire the heat correction factor corresponding to the present current value based on the target range.

According to one embodiment of the present application, the determination unit is further configured to:
determine the first preset current value, at least one intermediate protection current value and the second preset current value based on a plurality of current values input by a user; and
determine the plurality of preset ranges based on the first preset current value, each intermediate protection current value and the second preset current value,
wherein the lower limit of each range is the first preset current value or the intermediate protection current value, and the upper limit of each range is the intermediate protection current value or the second preset current value.

According to one embodiment of the present application, the acquisition unit is specifically configured to:
acquire the heat correction factor corresponding to the present current value based on a relationship corresponding to the target range.

According to one embodiment of the present application, the second acquisition module 200 further includes: a second acquisition unit, a third acquisition unit and a fourth acquisition unit.

The second acquisition unit is configured to: acquire protection time corresponding to the first preset current value and protection time corresponding to each intermediate protection current value.

The third acquisition unit is configured to: obtain the heat correction factor corresponding to the first preset current value based on a preset reference value according to the first preset current value and the protection time corresponding to the first preset current value, obtain the heat correction factor corresponding to each intermediate protection current value based on the preset reference value according to at least one intermediate protection current value and the protection time corresponding to each intermediate protection current value, and obtain the heat correction factor corresponding to the second preset current value based on the preset reference value according to the second preset current value.

The fourth acquisition unit is configured to: obtain a relationship corresponding to each range according to the heat correction factor corresponding to the first preset current value, the heat correction factor corresponding to each intermediate protection current value, the heat correction factor corresponding to the second preset current value, the first preset current value, at least one intermediate protection current value and the second preset current value.

According to one embodiment of the present application, the relationship corresponding to each range is a linear relationship.

According to one embodiment of the present application, the second acquisition unit is specifically configured to:
determine a heat correction factor corresponding to each range for each range according to current values at two endpoints of the range; and
obtain the relationship corresponding to each range based on the heat correction factor corresponding to each range.

According to one embodiment of the present application, the control module 300 is further configured to:
acquire a number of times of overcurrent protection; and
if the number of times of overcurrent protection is less than a preset number of times, after a preset waiting time, switch a state of stopping supplying power to the circuit to be protected to a state of supplying power to the circuit to be protected.

According to one embodiment of the present application, the control module 300 is further configured to:
if the number of times of overcurrent protection is greater than or equal to the preset number of times, maintain the state of stopping supplying power to the circuit to be protected.

According to one embodiment of the present application, the preset waiting time is determined according to the number of times the current value is greater than the first preset current value and the preset time interval.

According to one embodiment of the present application, the control module 300 is further configured to:
clear the present heat accumulation value to zero.

According to one embodiment of the present application, the control module 300 is further configured to:
if the present heat accumulation value is greater than the preset heat threshold, generate early warning information based on the present heat accumulation value and output the early warning information.

It should be noted that, the foregoing explanation of the overcurrent protection method embodiment is also applicable to the overcurrent protection apparatus in the embodiment, which will not be repeated here.

According to the overcurrent protection apparatus proposed in an embodiment of the present application, a current value of a circuit to be protected is acquired, and a heat accumulation value is calculated based on the current value of the circuit to be protected, a heat correction factor corresponding to the current value and a duration corresponding to the current value, so supplying power to the circuit to be protected is stopped when the heat accumulation value is greater than a certain value, solving the problems of low protection accuracy and high cost in the related art, and achieving more precise protection for harnesses and loads at a lower cost.

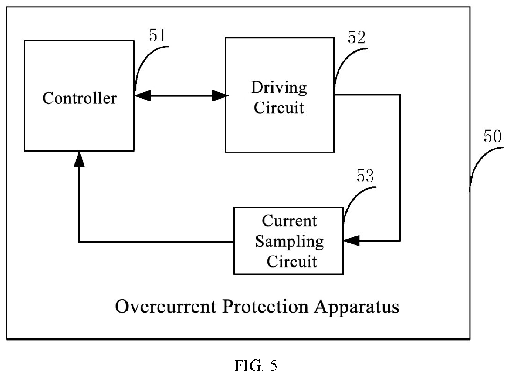

Furthermore, as shown in FIG. 5, an embodiment of the present application further proposes an overcurrent protection apparatus 50, including: a controller 51, a driving circuit 52 and a current sampling circuit 53, the driving circuit 52 and the current sampling circuit 53 being respectively connected to the control 50.

The current sampling circuit 53 is configured to: acquire a present current value of a circuit to be protected.

The controller 51 is configured to: if the present current value is greater than a first preset current value and less than or equal to a second preset current value, acquire a heat correction factor corresponding to the present current value and a duration corresponding to the present current value, and acquire a present heat accumulation value according to the present current value, the heat correction factor corresponding to the present current value and the duration corresponding to the present current value; and if the present heat accumulation value is greater than a preset heat threshold, control a driving chip to stop supplying power to the circuit to be protected.

According to one embodiment of the present application, the driving circuit 52 and the current sampling circuit 53 are integrated into a driving chip.

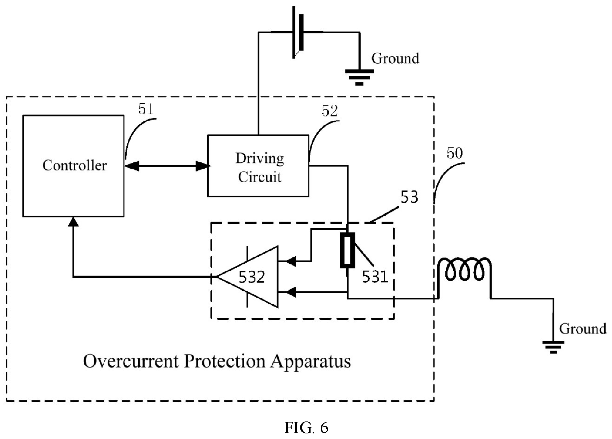

According to one embodiment of the present application, as shown in FIG. 6, the current sampling circuit 53 includes: a sampling resistor 531 and an amplifier 532.

The input of the sampling resistor 531 is connected to the output of the driving chip, and the output of the sampling resistor 531 is connected to a load of the circuit to be protected.

The first input of amplifier 532 is connected to the output of driving circuit 52, the second input of amplifier 532 is connected to the output of sampling resistor 531 and the load of the circuit to be protected respectively, and the output of amplifier 532 is connected to controller 51.

According to one embodiment of the present application, the controller 51 is further configured to: determine a target range in which the present current value is located from a plurality of preset ranges, and acquire the heat correction factor corresponding to the present current value based on a relationship corresponding to the target range.

According to one embodiment of the present application, the controller is further configured to: acquire protection time corresponding to the first preset current value, at least one intermediate protection current value, and protection time corresponding to each intermediate protection current value; obtain a heat correction factor corresponding to the first preset current value based on a preset reference value according to the first preset current value and the protection time corresponding to the first preset current value, obtain a heat correction factor corresponding to each intermediate protection current value based on the preset reference value according to at least one intermediate protection current value and the protection time corresponding to each intermediate protection current value, and obtain a heat correction factor corresponding to the second preset current value based on the preset reference value according to the second preset current value; and obtain a relationship corresponding to each range according to the heat correction factor corresponding to the first preset current value, the heat correction factor corresponding to each intermediate protection current value, the heat correction factor corresponding to the second preset current value, the first preset current value, at least one intermediate protection current value and the second preset current value.

It should be noted that, the foregoing explanation of the overcurrent protection method embodiment is also applicable to the overcurrent protection apparatus in the embodiment, which will not be repeated here.

According to the overcurrent protection apparatus proposed in an embodiment of the present application, a current value of a circuit to be protected is acquired by a current sampling circuit, and a heat accumulation value is calculated by a controller based on the current value of the circuit to be protected, a heat correction factor corresponding to the current value and a duration corresponding to the current value, so a driving chip is controlled to stop supplying power to the circuit to be protected when the heat accumulation value is greater than a certain value, solving the problems of low protection accuracy and high cost in the related art, and achieving more precise protection for harnesses and loads at a lower cost.

Furthermore, an embodiment of the present application further proposes a vehicle, including: the overcurrent protection apparatus in the embodiment as shown FIG. 4, or the overcurrent protection apparatus in the embodiment as shown FIG. 5.

According to the vehicle in an embodiment of the present application, by means of the overcurrent protection apparatus described above, the driving chip can be controlled to stop supplying power to the circuit to be protected when the heat accumulation value is greater than a certain value, solving the problems of low protection accuracy and high cost in the related art, and achieving more precise protection for harnesses and loads at a lower cost.

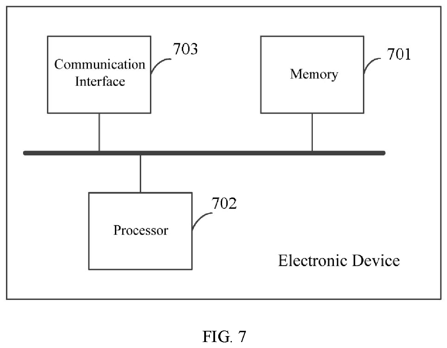

FIG. 7 is a schematic structural diagram of an electronic device provided in an embodiment of the present invention. The electronic device may include:
a memory 701, a processor 702, and a computer program stored on the memory 701 and executable on the processor 702.

The processor 702, when executing the program, implements the overcurrent protection method provided in the above embodiment.

Furthermore, the electronic device further includes:
a communication interface 703, configured to: enable communication between the memory 701 and the processor 702;
a memory 701, configured to: store the computer program executable on the processor 702.

The memory 701 may include a high-speed RAM (Random Access Memory), and may also include a nonvolatile memory, such as at least one disk storage.

If the memory 701, the processor 702, and the communication interface 703 are implemented independently, the communication interface 703, the memory 701, and the processor 702 can be interconnected via a bus and communicate with one another. The bus may be an ISA (Industry Standard Architecture) bus, a PCI (Peripheral Component Interconnect) bus, or an EISA (Extended Industry Standard Architecture) bus, or the like. Buses may be categorized into address buses, data buses, control buses, etc. For ease of representation, only one thick line is used in FIG. 7, but this does not mean that there is only one bus or one type of bus.

Optionally, in a specific implementation, if the memory 701, the processor 702, and the communication interface 703 are integrated on a single chip for implementation, then the memory 701, the processor 702, and the communication interface 703 can communicate with one another through an internal interface.

The processor 702 may be a CPU (Central Processing Unit), or may be an ASIC (Application Specific Integrated Circuit), or may be or one or more integrated circuits configured to implement the embodiment of the present invention.

The memory 701 may further include a program tool having a set (at least one) of program modules including but not limited to: an operating subsystem, one or more applications, other program modules, and program data. Each of these examples or a certain combination thereof, may include an implementation of a network environment.

The electronic device may also communicate with one or more external devices (such as keyboards, remote controls, etc.), may also communicate with one or more devices that enable the user to interact with the electronic device (such as mobile phones, computers, etc.), and/or may also communicate with any device that enables the electronic device to communicate with one or more other electronic devices (such as routers, modems, etc.). This communication may be performed through an input/output (I/O) interface. Furthermore, the electronic device may also communicate with one or more networks (such as a local area network (LAN), a wide area network (WAN), and/or a public network, such as the Internet) via a network adapter. The network adapter communicates with other modules of the electronic device via a bus. It should be understood that, in an embodiment of the present application, other hardware and/or software modules may be used in conjunction the electronic device, including but not limited to: microcodes, device drivers, redundant processors, external disk drive arrays, Redundant Arrays of Independent Disks (RAID) subsystems, tape drives, data backup storage subsystems, etc.

It should be noted that the electronic device shown in FIG. 7 is merely an example and should not impose any limitation on the functionality and scope of use of the embodiment of the present application.

An embodiment of the present application further provides a computer-readable storage medium storing a computer program, wherein the program is executed by a processor to implement the overcurrent protection method described above. Specifically, the executable program can be built-in or installed in an electronic device, so that the electronic device can implement the overcurrent protection method provided in an embodiment of the present application by executing the built-in or installed executable program.

An embodiment of the present application further provides a computer program which, when executed, is configured to implement the overcurrent protection method described above.

The program product provided in an embodiment of the present application may be any combination of one or more readable media. The readable medium may be a readable signal medium or a readable storage medium. The readable storage medium may be, but is not limited to, an electrical, magnetic, optical, electromagnetic, infrared, or semiconductor system, apparatus, or device, or any combination thereof. Specifically, a more specific example of readable storage media (a non-exhaustive list) includes: an electrical connection having one or more wires, a portable disk, a hard disk, RAM, ROM, an erasable programmable read-only memory (EPROM), an optical fiber, a portable compact disc read-only memory (CD-ROM), an optical storage device, a magnetic storage device, or any suitable combination of the foregoing.

The program product provided in an embodiment of the present application may be a CD-ROM and include a program code, and may be executable on a computing device. However, the program product provided in the embodiment of present application is not limited thereto. In the embodiment of present application, the readable storage medium may be any tangible medium that includes or stores a program which may be used by or in conjunction with an instruction execution system, apparatus or device.

It should be noted that although several units or sub-units of the apparatus are mentioned in the detailed description above, this division is merely exemplary and not mandatory. In fact, according to the embodiment of the present application, the features and functions of two or more units described above can be embodied in one unit. Conversely, the features and functions of one unit described above can be further embodied into multiple units

Furthermore, although the operations of the method in the present application are described in a specific order in the accompanying drawings, this does not require or imply that these operations must be performed in that specific order, or that all of the operations shown must be performed in order to achieve the desired result. Additionally, or alternatively, certain steps may be omitted, multiple steps may be combined into one step, and/or one step may be broken down into multiple steps for execution.

The terms "first" and "second" are used for descriptive purposes only and should not be construed as indicating or implying relative importance or implicitly specifying the number of technical features indicated. Therefore, features defined as "first" or "second" may explicitly or implicitly include at least one of those features. In the description of the present application, "multiple" means at least two, such as two, three, etc., unless otherwise expressly and specifically limited.

In the description of this specification, references to the terms "one embodiment", "some embodiments", "example", "specific example", or "some examples", etc., refer to a specific feature, structure, material, or characteristic described in connection with that embodiment or example that is included in at least one embodiment or example of the present application. In this specification, the illustrative expressions of the terms used above are not necessarily intended to refer to the same embodiments or examples. Furthermore, the specific features, structures, materials, or characteristics described may be combined in a suitable manner in any one or more embodiments or examples. Furthermore, those skilled in the art can combine and integrate the different embodiments or examples described herein, as well as the features of the different embodiments or examples, without contradiction.

Finally, it should be noted that the above embodiments are only used to illustrate the technical solutions of the present application and are not intended to limit same. Although the present application has been described in detail with reference to the embodiments, those skilled in the art should understand that any modifications or equivalent substitutions to the technical solutions of the present application shall not depart from the gist and scope of the technical solutions of the present application, and shall be covered within the scope of the claims of the present application.

## Claims

1. An overcurrent protection method, **characterized by** comprising:
acquiring a present current value of a circuit to be protected;
if the present current value is greater than a first preset current value and less than or equal to a second preset current value, acquiring a heat correction factor corresponding to the present current value and acquiring a duration corresponding to the present current value, and acquiring a present heat accumulation value according to the present current value, the heat correction factor corresponding to the present current value and the duration corresponding to the present current value; and
if the present heat accumulation value is greater than a preset heat threshold, stopping supplying power to the circuit to be protected.

2. The method according to claim 1, further comprising the following steps after acquiring the present heat accumulation value according to the present current value, the heat correction factor corresponding to the present current value and the duration corresponding to the present current value:
if the present heat accumulation value is less than or equal to the preset heat threshold, acquiring a new current value of the circuit to be protected at a preset time interval, and acquiring a heat correction factor corresponding to the new current value and a duration corresponding the new current value;
acquiring a new present heat accumulation value based on the present heat accumulation value, the new current value, the heat correction factor corresponding to the new current value and the duration corresponding to the new current value; and
if the new present heat accumulation value is less than or equal to the preset heat threshold, continuing the step of acquiring the new current value of the circuit to be protected at the preset time interval until the new present heat accumulation value is greater than the preset heat threshold; and if the new present heat accumulation value is greater than the preset heat threshold, stopping supplying power to the circuit to be protected.

3. The method according to claim 1, further comprising the following step after acquiring the present current value of the circuit to be protected:
if the present current value is greater than the second preset current value, stopping supplying power to the circuit to be protected.

4. The method according to claim 1, wherein acquiring the heat correction factor corresponding to the present current value comprises:
determining a target range in which the present current value is located from a plurality of preset ranges; and
acquiring the heat correction factor corresponding to the present current value based on the target range.

5. The method according to claim 4, further comprising the following steps before determining the target range in which the present current value is located from the plurality of preset ranges:
determining the first preset current value, at least one intermediate protection current value and the second preset current value based on a plurality of current values input by a user; and
determining the plurality of preset ranges according to the first preset current value, each intermediate protection current value and the second preset current value,
wherein the lower limit of each range is the first preset current value or the intermediate protection current value, and the upper limit of each range is the intermediate protection current value or the second preset current value.

6. The method according to claim 5, wherein acquiring the heat correction factor corresponding to the present current value based on the target range comprises: acquiring the heat correction factor corresponding to the present current value based on a relationship corresponding to the target range;
before acquiring the heat correction factor corresponding to the present current value based on the relationship corresponding to the target range, the step further comprises:
acquiring protection time corresponding to the first preset current value and protection time corresponding to each intermediate protection current value;
obtaining a heat correction factor corresponding to the first preset current value based on a preset reference value according to the first preset current value and the protection time corresponding to the first preset current value, obtaining a heat correction factor corresponding to each intermediate protection current value based on the preset reference value according to the at least one intermediate protection current value and the protection time corresponding to each intermediate protection current value, and obtaining a heat correction factor corresponding to the second preset current value based on the preset reference value according to the second preset current value; and
obtaining a relationship corresponding to each range according to the heat correction factor corresponding to the first preset current value, the heat correction factor corresponding to each intermediate protection current value, the heat correction factor corresponding to the second preset current value, the first preset current value, the at least one intermediate protection current value and the second preset current value.

7. The method according to claim 6, wherein the relationship corresponding to each range is a linear relationship.

8. The method according to claim 7, wherein obtaining the relationship corresponding to each range according to the heat correction factor corresponding to the first preset current value, the heat correction factor corresponding to each intermediate protection current value, the heat correction factor corresponding to the second preset current value, the first preset current value, the at least one intermediate protection current value and the second preset current value comprises:
determining a heat correction factor corresponding to each range for each range according to current values at two endpoints of the range; and
obtaining the relationship corresponding to each range based on the heat correction factor corresponding to each range.

9. The method according to claim 1, further comprising the following steps after stopping supplying power to the circuit to be protected:
acquiring a number of times of overcurrent protection;
if the number of times of overcurrent protection is less than a preset number of times, after a preset waiting time, switching a state of stopping supplying power to the circuit to be protected to a state of supplying power to the circuit to be protected; and
if the number of times of overcurrent protection is greater than or equal to the preset number of times, maintaining the state of stopping supplying power to the circuit to be protected.

10. The method according to claim 9, wherein the preset waiting time is determined according to the number of times the present current value is greater than the first preset current value and the preset time interval.

11. An overcurrent protection apparatus, comprising:
a first acquisition module configured to: acquire a present current value of a circuit to be protected;
a second acquisition module configured to: if the present current value is greater than a first preset current value and less than or equal to a second preset current value, acquire a heat correction factor corresponding to the present current value and a duration corresponding to the present current value, and acquire a present heat accumulation value according to the present current value, the heat correction factor corresponding to the present current value and the duration corresponding to the present current value; and
a control module configured to: if the present heat accumulation value is greater than a preset heat threshold, stop supplying power to the circuit to be protected.

12. An overcurrent protection apparatus, **characterized by** comprising: a controller, a driving circuit and a current sampling circuit, the driving circuit and the current sampling circuit being respectively connected to the controller, wherein
the current sampling circuit is configured to: acquire a present current value of a circuit to be protected; and
the controller is configured to: if the present current value is greater than a first preset current value and less than or equal to a second preset current value, acquire a heat correction factor corresponding to the present current value and a duration corresponding to the present current value, and acquire a present heat accumulation value according to the present current value, the heat correction factor corresponding to the present current value and the duration corresponding to the present current value; and if the present heat accumulation value is greater than a preset heat threshold, control a driving chip to stop supplying power to the circuit to be protected.

13. The overcurrent protection apparatus according to claim 12, wherein the driving circuit and the current sampling circuit are integrated into a driving chip.

14. The overcurrent protection apparatus according to claim 12, wherein the current sampling circuit comprises:
a sampling resistor, the input of the sampling resistor being connected to the output of the driving chip, and the output of the sampling resistor being connected to a load of the circuit to be protected; and
an amplifier, the first input of the amplifier being connected to the output of the driving circuit, the second input of the amplifier being connected to the output of the sampling resistor and the load of the circuit to be protected, respectively, and the output of the amplifier being connected to the controller.

15. A vehicle, **characterized by** comprising the overcurrent protection apparatus of claim 11, or the overcurrent protection apparatus of any one of claims 12-14.

16. An electronic device, **characterized by** comprising: a memory, a processor and a computer program stored in the memory and executable on the processor, wherein the processor executes the program to implement the overcurrent protection method of any one of claims 1-10.

17. A computer-readable storage medium storing a computer program, **characterized in that** the program is executed by a processor to implement the overcurrent protection method of any one of claims 1-10.
